# EUROPEAN PATENT APPLICATION

(11) **EP 3 525 160 A1**
(43) Date of publication of application: **14.08.2019**
(21) Application number: 19156174.5
(22) Date of filing: 08.02.2019
(51) Int. Cl.: G06Q 50/06, B67D 7/04

(54) **CUSTOMER IDENTIFICATION AT FILLING STATION**

(30) Priority: 09.02.2018 IT 201800002540
(71) Applicant: Galbit Electronics Ltd., 4951337 Petach Tikva (IL); Gold Game Import & Marketing Ltd., 4728309 Ramat Hasharon (IL); Infogame Ltd., 7680900 Irus (IL)
(72) Inventor: SALMAN, David, 7680900 Irus (IL)
(74) Representative: ABG Intellectual Property, S.L.

(57) **Abstract**

A system and method for confirming a refueling transaction in a filling station. When a vehicle enters the filling station, one or more video cameras track the vehicle. A server receives the cameras' video, analyzes the image and recognizes the vehicle license number and model. The server verifies via the cameras' video input that fuel is pumped from the fuel pump to the selected vehicle. The server then stores a record of the fueling transaction including video footage.

## Description

### FIELD OF THE INVENTION

The present invention is directed to systems and methods for transaction authentication, particularly with respect to consumer vehicle fuel purchases.

### BACKGROUND

Modern systems for refueling and payment at gas stations (hereinbelow "filling stations") have virtually eliminated the need for station attendants. However, self-service systems at filling stations are susceptible to a variety of forms of fraud. For example, customers that use corporate fuel cards, or other methods for making corporate fuel purchases, may use those methods to refuel vehicles other than the authorized corporate vehicles. Systems based on vehicle identification hardware, such as fuel tank identification chips, can also be abused, because after the identification chip is recognized customers may dispense fuel to unauthorized vehicles concurrently in the filling station, or to other receptacles. Customers may also refuel non-business vehicles, but subsequently claim that the transactions were for business vehicles eligible as tax-deductible expenses. Filling station operators also occasionally face spurious accusations by customers that charges were based on fuel pump errors. For example, a customer may protest a charge for 15 gallons of fuel, claiming that his vehicle had a 12-gallon maximum capacity. However, the customer may have dispensed the additional fuel to an additional receptacle.

A more secure and reliable identification system could benefit filling station operators, tax authorities, consumers, and fleet owners.

### SUMMARY

Embodiments of the present invention provide systems and methods for a filling station vehicle identification and transaction system, according to an embodiment of the present invention.

The present invention relates to a system for controlling a refueling transaction at a filling station comprising: one or more video cameras configured to capture video of a vehicle in the filling station; a server, communicatively coupled to the one or more video cameras and to a controller of a fuel pump of the filling station, and comprising a processor and a memory with computer-readable instructions that when executed cause the processor to perform steps of:
determining from the video via image recognition techniques a license plate number and a type of the vehicle;
validating a match of the license plate number and the vehicle type according to a registered vehicle database;
identifying the location of the fuel tank entry of the vehicle;
determining from the video via image recognition techniques a fuel pump in proximity to the vehicle, having a fuel hose capable of reaching the identified fuel tank entry of the vehicle;
validating said fuel pump to enable a refueling transaction with the vehicle;
determining from the video via image recognition techniques, after the refueling transaction is authorized, that a nozzle of the fuel pump is inserted into the identified fuel tank entry of the vehicle;
activating the fuel pump nozzle to dispense fuel, after determining the nozzle is inserted into the identified fuel tank entry of the vehicle; and
determining from the video via image recognition techniques that the nozzle is inserted into the fuel tank before reactivating the fuel pump after it has stopped to dispense fuel.

In some embodiments, the determination of the vehicle license plate number is performed by optical character recognition and determining the vehicle type is performed by video analytics.

In some embodiments, one or more video cameras track the vehicle when entering the filling station, while advancing in the filling station and while fueling.

In some embodiments, if it cannot be determined from the video that the nozzle is inserted into the identified fuel tank, the system issues a message to the vehicle driver to clear the area near the fuel tank, so the inserted nozzle can be captured on said video.

In some embodiments, the server is further configured to authenticate the customer by validating a customer input against a customer ID, wherein the customer input is one or more of a code entered at a fuel pump console, a biometric measure identifying the customer, a signal from a vehicle hardware device, or a response from a predefined mobile device or mobile application.

In some embodiments, the server is further configured to determine a failed match of the license plate number and the vehicle type and responsively to issue an alert to an external party.

In some embodiments, the server is further configured to generate a refueling transaction record including a transaction identifier and optionally video support for the refueling transaction.

In some embodiments, the server is further configured to store the video with the transaction identifier for subsequent playback.

In some embodiments, the transaction record further includes one more of the license plate number, the vehicle type, a filling station identifier, a time and date of transaction, an amount of fuel provided, and an amount paid or to be paid.

In another aspect, the present invention relates to a computing system comprising: at least one processor; and at least one memory communicatively coupled to the at least one processor comprising computer-readable instructions that when executed by the at least one processor cause the computing system to implement a method of controlling a filling station transaction, the method comprising:
reading video received from one or more video cameras in the filling station;
determining from the video via image recognition techniques a license plate number and a type of the vehicle;
validating a match of the license plate number and the vehicle type according to a registered vehicle database;
identifying the location of the fuel tank entry of the vehicle;
determining from the video via image recognition techniques a fuel pump in proximity to the vehicle, having a fuel hose capable of reaching the identified fuel tank of the vehicle;
validating said fuel pump to enable a refueling transaction with said vehicle;
determining from the video via image recognition techniques that a nozzle of the fuel pump is connected to the identified fuel tank entry of the vehicle;
activating the fuel pump nozzle to dispense fuel, responsively to validating the match, determining the proximate fuel pump, and determining the connection of the nozzle to the fuel pump; and
maintaining activation of the nozzle while determining from the video that the nozzle remains connected to the fuel tank.

In another aspect, the present invention relates to a computerized system for controlling a refueling transaction at a field filling station comprising: a field terminal adapted to capture one or more images of a work vehicle in the field filling station;
a server, communicatively coupled to the field terminal and to a controller of a field fuel pump of the field filling station, and comprising a processor and a memory with computer-readable instructions that when executed cause the processor to perform steps of:
determining from the captured one or more images via image recognition techniques a license plate number and a type of the work vehicle;
validating a match of the license plate number and the work vehicle type according to a registered work vehicle database;
identifying the location of the fuel tank entry of the vehicle;
determining from the video via image recognition techniques a fuel pump in proximity to the vehicle, having a fuel hose capable of reaching the identified fuel tank entry of the vehicle;
determining from the one or more captured images via image recognition techniques, that a nozzle of said field fuel pump is inserted into a fuel tank of said work vehicle;
determining from one or more captured images, via image recognition techniques, the work vehicle's current millage and/or engine hours;
determining from one or more captured images, via image recognition techniques, that the field fuel nozzle is inserted into the fueling tank of said work vehicle;
authenticating a fueling person;
activating the fuel pump nozzle to dispense fuel; and
when determining from the captured one or more via image recognition techniques that the nozzle is not inserted into the fuel tank the line of sight to the nozzle is obstructed, stopping the fueling to the work vehicle.

In some embodiments, the field terminal includes an accelerometer to determine the actual location of the field terminal. The field terminal can be a mobile phone (of the field vehicle driver) running a dedicated application that communicates with the system of the invention. Alternatively, the field terminal can be a dedicated camera, provided by the field filling station.

The field terminal may capture still images and/or video images.

In some embodiments, the field terminal includes a compass to determine the field terminal's actual orientation.

In some embodiments, the one or more video cameras are operator by the vehicle driver.

### BRIEF DESCRIPTION OF DRAWINGS

The accompanying drawings illustrate embodiments of the disclosed subject matter and explain principles of embodiments of the disclosed subject matter. Structural details are shown only to the extent necessary for an understanding of the disclosed subject matter and the various ways in which it may be practiced.
**Fig. 1** is a schematic, block diagram of a filling station vehicle identification and transaction system, according to an embodiment of the present invention.
**Fig. 2** is a flow diagram of a process implemented by the filling station vehicle identification and transaction system, according to an embodiment of the present invention.
**Fig. 3** is a schematic, block diagram of a field filling station vehicle identification and transaction system, according to an embodiment of the present invention.
**Fig. 4** is a flow diagram of a process implemented by the field filling station vehicle identification and transaction system, according to an embodiment of the present invention.

### DETAILED DESCRIPTION OF THE INVENTION

In the following detailed description of various embodiments, reference is made to the accompanying drawings that form a part thereof, and in which are shown by way of illustrating specific embodiments by which the invention may be practiced. It is understood that other embodiments may be envisioned, and structural changes made without departing from the scope of the present invention.

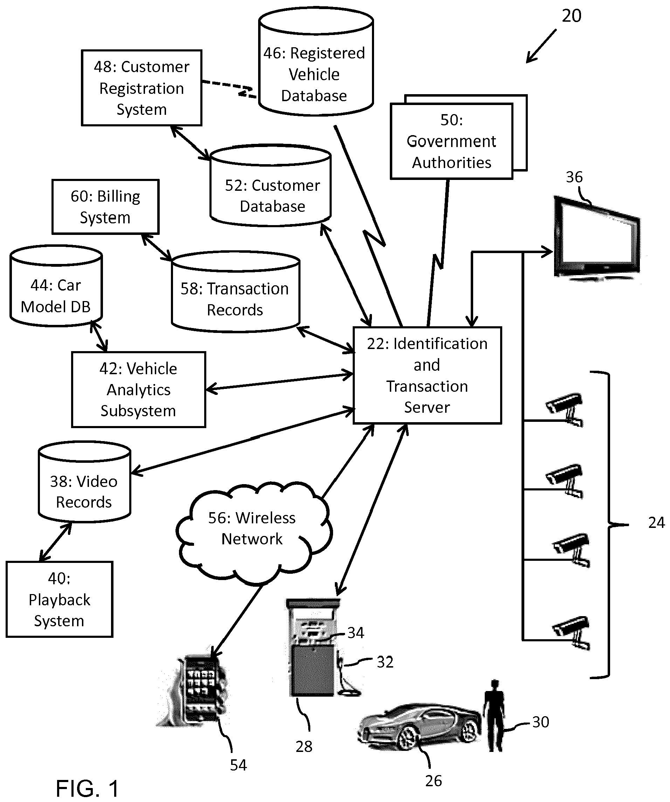

**Fig. 1** is a schematic, block diagram of a filling station vehicle identification and transaction system **20,** according to an embodiment of the present invention. The system includes an Identification and Transaction Server **22** (hereinbelow "server"), typically a computer-based system comprising software operating on computer hardware, including a processor and coupled memory, that may be located at a filling station and/or at remote locations. In some embodiments, the server may be operated by a third-party operator. The server **22** may receive video streams from one or more video cameras **24,** installed in positions on the property of the filling station.

The term filling station relates to any energy supply to vehicles, including but not limited to gasoline, diesel, electricity or any other present or future energy supply to vehicles.

The one or more video cameras are configured to capture video of vehicles while the vehicles are in the station, such as a vehicle **26** that enters the filling station for refueling. Preferably, the video cameras follow the vehicle the entire time the vehicle is at the filling station: at the entry point to the filling station, while moving inside the filling station, and while fueling. The video cameras may have a variety of capabilities and resolutions, depending on their positions in the station. Different cameras may also have particular filming tasks. For example, one or more cameras may be positioned close to the fuel pumps of the filling station, such as a fuel pump **28,** the camera **24** being positioned at a height that permits a clear view of the vehicle's license plate, which may not require zoom or wide field-of-view (FOV) capabilities. In additional or alternative embodiments, one or more cameras **24** may be positioned at a greater height to view vehicles from several angles, so as to more readily facilitate identification of a vehicle model type, as described further hereinbelow. In yet additional or alternative embodiments, one or more cameras may be positioned to have a wide frame of view to track movements of the vehicle and of a customer **30** (driver and/or passengers and/or a person paying for the refueling), including actions related to a refueling process, such as taking a fuel nozzle **32** from the fuel pump **28,** affixing the fuel nozzle **32** to a vehicle fuel tank, pressing a trigger of the nozzle **32** to begin dispensing fuel, releasing the trigger to stop the flow of fuel, removing the nozzle **32** from the fuel tank and returning it to its position on the fuel pump **28.**

Video cameras **24** may or may not have additional capabilities such as pan, tilt, and zoom capabilities, as well as motion sensing, by which video capture may be triggered. Alternatively, video capture may be a continuous operation. Video cameras **24** may also include optical character recognition and additional video analytics capabilities, such that the video analytics capabilities described below are distributed between the server and the cameras **24.**

The server **22** is also configured to communicate, by wired or wireless means known in the art, with the fuel pump **28.** Communications with the fuel pump **28** is implemented as communications with one or more processors of the fuel pump **28,** referred to collectively hereinbelow as a fuel pump controller. Such a fuel pump controller may include elements such as a standard automatic tank gauge (ATG) system. The controller may be configured to receive control signals from the server **22** to activate the pump nozzle **32,** enabling the flow of fuel, and to deactivate the nozzle **32,** disabling the fuel flow. In general, fuel flow requires both that the controller activate the nozzle **32** and that a person physically press a nozzle trigger. The communication with the pump controller may include communication and display of data on the pumps display and saving data in the controller database, such as the plate number of the vehicle **26** being fueled and instructions to the customer **30** if necessary.

The controller typically is also configured to meter the quantity of fuel dispensed and to communicate the metered readings to the server. The fuel pump also typically includes a fuel pump console **34,** which may include a keypad and a screen. The controller receives input from the customer **30** by means of the keyboard and displays messages on the screen. The fuel pump console **34,** often a standard fuel pump screen and keypad, is typically installed on a front panel of the fuel pump **28** or adjoining the fuel pump **28.** Additional signals that may be communicated to and from the fuel pump **28** are described further hereinbelow.

In some embodiments, the streamed video captured by the cameras **24** may also be displayed at one or more operator monitors **36** which may be located at the filling station and/or at a remote surveillance location. In addition, streamed video may be continuously stored in a local or remote video records database **38,** either being transmitted to storage by the server **22,** as indicated in **Fig. 1****,** or directly by the cameras **24.** Alternatively, video is stored as separate, individual files for each transaction, as described further hereinbelow. A local or remote video playback system **40** permits subsequent viewing of stored videos. Alternatively, or additionally, video may be transmitted to remote locations, as described further hereinbelow.

When a vehicle **26** enters the filling station, one or more of the cameras **24** transmit video including the image of the vehicle **26** to the server **22,** which recognizes the vehicle **26** by means of image recognition techniques of the art, including video analytics, that is, video image processing typically based on machine learning, image processing (for object identification) methods and classification methods known in the art. The server **22** can then monitor the vehicle **26** throughout some or all of the period that the vehicle **26** is in the filling station.

One or more cameras **24** for tracking the vehicle **26** may be situated at the entrance of the filling station. Additionally, or alternatively, one or more cameras **24** positioned at other locations in the station may be configured to have a sufficient resolution and field of view to identify the vehicle **26** entering the station. Such cameras **26** may also have pan capabilities and furthermore may be capable of tracking vehicles **26** during the entire duration of their stay / travel through the filling station. The same cameras **24,** or one or more additional cameras **24,** may also be configured to monitor customers **30** who may leave their vehicles **26** at some point during the duration of the vehicles' **26** time in the station, for example, to operate the fuel pump **28.** Similarly, the same cameras **24,** or one or more additional cameras **24** may also be configured to visually monitor the fuel pump **28,** including the fuel pump hose, and nozzle **32,** for video recognition processes described further hereinbelow.

In some embodiments, the system includes one or more cameras **24** with a wide frame located high enough to capture a portion of the filling station. All captured frames cover the entire area of the filling station. The captured frames (images) from all the cameras **24** can be stitched together to provide a single image of a top view of the filling station and mapped with coordination lines to enable tracking vehicles **24,** people **30,** and the filling station devices / instruments (Pump **28,** Nozzle **32,** Nozzle pipe and so on).

The refueling area refers to a calculated area where the fuel filling handle of a specific pump can reached and inserted into a fuel tank of a particular vehicle in place. The system relates to the vehicle's fueling tank entrance as an entity. And detects it when it enters the fueling area of one or more pumps. Displaying a payment method to a particular pump will cause the pump to display the list of cars whose fueling tank entrance are in the pump's "filling area". According to the order of feasibility determined by an algorithm in the system (a vehicle that is already fueling in another pump or filling fuel already, is removed from the list).

While the vehicle **26** is in motion from its entrance to the filling station or after the vehicle **26** stops at a fuel pump **28,** the server **22** may apply an OCR algorithm to one or more video frames of the streamed video to determine a license plate number of the vehicle **26.** In addition, the server **22** typically includes a vehicle analytics subsystem **42,** which is configured, typically by methods of video analytics (based on methods of computer vision and/or machine learning known in the art), to recognize distinguishing vehicle **26** features from one or more video frames of the streamed video, vehicle features that are then associated with one or more aspects of vehicle make, model, sub-model, color, etc. Hereinbelow, these one or more aspects are referred to collectively as the "vehicle type". Vehicle type specifications in the analytics subsystem may be obtained from manufacturers' specifications and may be acquired from a vehicle model database **44.** The specifications may include additional information such as the position of the fuel tank opening (such distance from the car front and right or left side), the type of fuel and the capacity of the fuel tank. This information may be applied subsequently by the analytics subsystem to monitor the refueling process, as described further hereinbelow. Other server **22** processes for vehicle identification, tracking, and billing described below may also extract information from the model database.

A registered vehicle database **46** generally includes vehicle registration information, including license plate numbers, vehicle type, vehicle color, type of fuel and vehicle ownership of registered vehicles. The server **22** may send a query to the vehicle database **46** to validate that the license number, determined by OCR, matches the vehicle type determined by the additional video analytics. The information in the vehicle database **46** may be derived from a government vehicle registrar or based on a specification provided by a prior customer registration process, provided by a customer registration system **48.** The vehicle database **46** may be operated by a third party, such as the government registrar itself. Alternatively, the database **46** may be operated by a third-party billing operator, which may also operate the customer registration system **48.**

If the registered vehicle database does not indicate a match between the license plate number and vehicle type, the server **22** is typically configured to refuse service to the customer. That is, the server **22** will not subsequently signal the fuel pump **28** to permit refueling. An alert message may be displayed on the fuel pump console **34** and/or on the operator monitor **36.** Alternatively, or additionally, a report may be generated for various entities, such as fuel station management and one or more government authorities **50,** such as a transportation or law enforcement authority. The report may include one or more frames of video including the vehicle in question. and may display the alert message.

If there is a match between the identifying characteristics of license number and vehicle type, the server **22** may then use the identifying characteristics to query a customer database **52.** If a customer is registered, the customer database **52** may include information relevant to documenting a filling station transaction, such as how the customer is to be billed. The customer database **52** may also retrieve information from the vehicle's manufacturer's database, to retrieve vehicle-pertinent information such as precise positioning of the fueling tank and fuel tank capacity.

Information in the customer database **52** is typically acquired through a registration process of the customer registration system described above. Records may be updated as customer information changes. For example, a customer's billing information may no longer be valid, if, for example, a customer's bank rejected a prior bill. In such a case, the server **22** may refuse service (not authorize a fueling transaction) and issue alert messages to the fuel pump console **34** and/or the operator monitor **36,** as described above. Alternatively, in further embodiments, a customer may pay by any other conventional / standard means of payment, such as credit card, debit card fuel card, cash, electronic payment, mobile payment, coupon(s) or through a payment system linked to a vehicle hardware installed chip, as described above. Typically, one or more of such methods would be available to a customer who was not registered to pay based on video recognition.

Information in the customer database **52,** which may be subsequently included in a transaction record produced after the customer refuels, may include the form of billing preferred by the customer, such as whether there is prepaid credit or billing to a third party, such as a fleet operator, a corporation, a business or any other legal entity that can be billed. A prepaid credit may also limit the amount of fuel that may be dispensed from a pump **34.** The limit on fuel dispensed may be included in a signal sent from the server **22** to the fuel pump **34.**

Records for a customer in the customer database **52** may also indicate whether additional identifying information is required from a customer before the server **22** authorizes / activates fueling. The customer may be requested to provide a PIN number at the fuel pump console **34,** which the server **22** then confirms against security information in the customer database **52.** Alternatively, or additionally, the customer may be required to enter an identifying card at the fuel pump console **34** (such as a magnetic stripe or chip card), and/or biometric data, such as face, hand, or finger identification at a suitable, biometric reader of the console. Alternatively, or additionally, customer identification may be provided confirming the customer's possession of a predefined mobile device **54,** or mobile application, available over a wireless network, such as a cellular network **56.** For example, a purchase authorization request may be sent as a message, such as an SMS message, to the customer's mobile phone **54,** requiring that the customer respond with an approval, also by SMS. Alternatively, the customer may be required to enter into the fuel pump console **34** a code received by SMS, or by other mobile messaging means. The customer may also be identified by a mobile application, installed on the mobile device **54,** which may transmit location data to the server **22,** confirming that the mobile device **54** is with the customer at the filling station.

Assuming the required identification and authorization are confirmed, the server **22** may determine, by video analysis of the one or more video streams, which fuel pump **28** is accessible to the fuel tank of the identified vehicle **26.** The analytics subsystem **42** may be configured to determine, from frames of the video stream, the proximate fuel pump **28** based on whether a hose of the fuel pump nozzle **32** is sufficiently long to reach the vehicle's fuel tank entry (opening).

In some embodiments, the server **22** first identifies the location of the fuel tank entry of the identified vehicle **26** and then determines from the video via image recognition techniques a fuel pump **28** in proximity to the vehicle **26,** having a fuel hose capable of reaching the identified fuel tank entry of the vehicle **26.** Identifying the actual location of the fuel tank entry is crucial for determining if the hose can reach the fuel tank entry. For example, a hose might reach a vehicle **26** in a given location if the fuel tank entry is located on the driver side of the vehicle, but may not reach the fuel tank of that vehicle **26** if the fuel tank entry is on the opposite side.

The server **22** may also send a message to the fuel pump console **34,** requesting customer input to confirm the license plate number of the vehicle **26** to be refueled from the given pump **28.** (This request may be reiterated if there are multiple vehicles **26** within the range of the fuel pump **28**.) In some embodiments, the fuel pump console **34** may display only recognized and authorized vehicles' **26** license plates and a customer may only select a vehicle **26** for a fueling transaction when such a vehicle **26** is recognized, authorized and its fuel tank opening is within reach of an appropriate fuel pump nozzle **32** (in terms of matching fuel type and within reaching distance of the fuel pump nozzle **32**). In some embodiments, the fuel pump **28** will only dispense fuel when it is confirmed that the fuel pump nozzle **32** is in the fuel tank of the selected vehicle **26** for fueling.

Alternatively, or additionally to receiving customer confirmation of the license plate number, the server **22** may be configured to permit fueling after recognizing by video analysis that the pump nozzle **32** has been placed in the fuel tank of the identified vehicle **26** (herein, "connected to the fuel tank"), and/or after determining that the fuel type dispensed by the nozzle **32** selected by the customer matches a fuel type of the identified vehicle type, according to the vehicle database (**46** and/or **44**). For example, the server **22** may prevent refueling from a diesel fuel pump nozzle **32** to a vehicle **26** that runs on gasoline. The server **26** may, instead, send an alert message that may appear on the fuel pump console **34.**

The server **22,** after determining that the customer has selected a given fuel pump **28** and selected the proper fuel, may send a signal to the fuel pump **28** to activate refueling (also referred to herein as "enabling" or "permitting" refueling), so that a customer may then start "pumping" fuel. The signal sent from the server **22** may include a limit on an amount of fuel to be dispensed, based on the known fuel capacity of the vehicle **26,** as determined from the vehicle database **44, 46** described above, or based on the prepaid limit described above.

The refueling of the vehicle **26** is performed typically by the customer or by a filling station attendant. During the refueling process, the cameras **24** (one or more) may continue to monitor the vehicle **26,** the pump nozzle **32,** and the customer and/or attendant, and to stream the video to the analytics subsystem **42.** The analytics subsystem **42** may be configured to detect "suspicious" movement indicating that fuel is being diverted. The movement may be an action or motion of the customer and/or the attendant and/or the fuel pump nozzle **32.** For example, the analytics subsystem **42,** having information as described above regarding the position of the fuel tank opening, may detect a likelihood that the nozzle **32** is removed from the gas tank, or that the nozzle **32** is used to dispense fuel to a vehicle **26** or receptacle other than the identified vehicle **26.** In such cases, the server **22,** according to a prior setting, may signal the fuel pump **28** to stop dispensing fuel, or may store a record of the possible inappropriate customer action. Certain situations, such as the customer seemingly concealing the nozzle **32** from a camera's **24** field of view, may also indicate a likelihood that the nozzle **32** is removed from the gas tank. Upon making such a determination, the server **22** may also cause an alert to be triggered.

When the refueling is completed, the fuel pump controller typically provides a signal to the server **22** indicating the completion status and providing data on the quantity dispensed. The refueling may be considered completed when the pump nozzle **32** is returned to its base. In some embodiments, before authorizing a fueling transaction the system consults the customer database **52** and/or transaction records database **58** and/or any other internal or external database in order to detect irregularities that may indicate a fraudulent situation. For example, a request to refuel a vehicle a short time after a successful fueling transaction when it's obvious the vehicle could not have travelled enough to require refueling.

Following completion of the refueling, the server **22** may continue to track the vehicle **26** until it exits the filling station. The server **22** may then store a record of the transaction time (which may include the refueling date and time and/or the vehicle's arrival and/or departure time). Typically, the time record is part of a transaction record that is generated. The time record may be used to retrieve from within a longer stored video the portion of video showing the vehicle **26** in the station. Alternatively, or additionally, a separate clip of the vehicle's **26** visit to the filling station may be stored, in a manner linked to identifying information of the transaction, for future retrieval and playback. The stored video can serve several purposes, such as proving that a customer's transaction took place, in the event that the customer refutes a bill, or in the event that the customer's expenses are questioned by a tax authority. Alternatively, or additionally, the video may be transmitted to a third party, such as the tax authority, which may process and/or store the video.

Once refueling is complete, the server **22** creates and stores the transaction record to a transaction database **58.** The transaction record typically includes a transaction identifier and a vehicle identifier, such as date and time, the license plate number obtained as described above, and/or additional transaction information such as the vehicle type, an identifier of the customer, a filling station identifier (such as location), the time record described above, the fuel type, the quantity, and the price of the fuel dispensed, payment method, and a total cost of the fuel, that is the amount paid or to be paid by the customer. The transaction record may also include billing information, such as the form of payment and the party to be billed. The transaction record may also include a validation flag indicating whether or not, according to the analytics applied to the video stream, all fuel dispensed for the transaction was dispensed solely to the identified vehicle **26.** As described above, the transaction record generally includes a link, such as a transaction identifier, linking the transaction record to the video recording of the vehicle **26** during the vehicle's time in the station. The link permits the video to be readily accessed to provide visual support for the occurrence of the transaction.

The transaction record may be used to create an invoice for billing the customer, which may be processed through a billing system **60.** Transaction records may also be sent directly to customers. In some embodiments, the transactions records may be transmitted to regulatory authorities, such as a national tax authority to corroborate customer expenses with tax records. Such transmissions may also include some or all the video showing the vehicle **26** in the station at the time of the transaction.

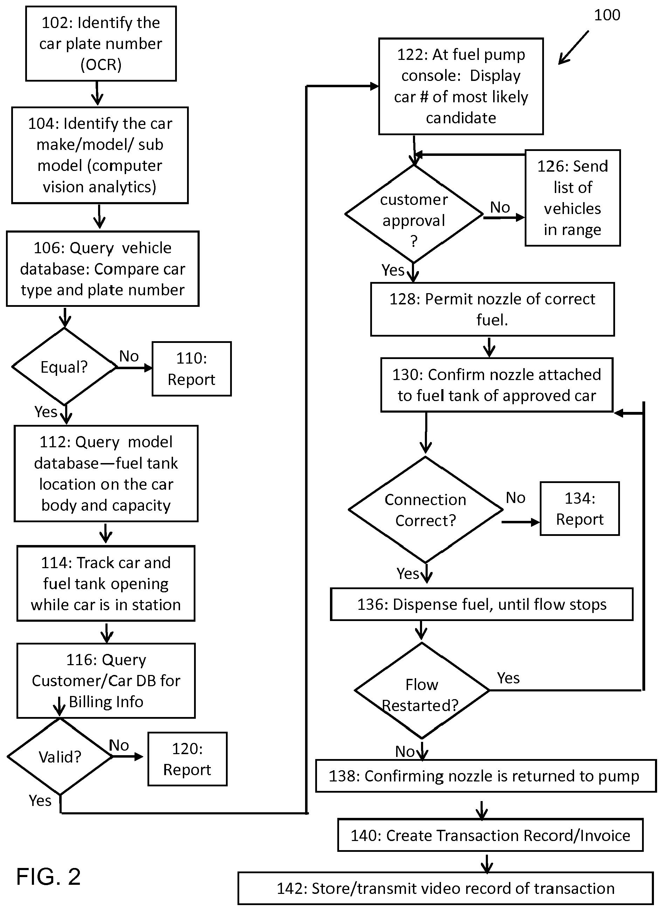

**Fig. 2** is a flow diagram of a process **100** implemented by the filling station vehicle identification and transaction system described above, according to an embodiment of the present invention. All or some of steps indicated in **Fig. 2** may be implemented in various embodiments of the invention.

Prior to implementation of process **100,** a pre-registration process may be performed, by which a customer may provide billing information and other identifying information as described above. In addition, the customer may also enter vehicle identifying information, such as the correspondence of vehicle type and license number, which, alternatively or additionally, may be provided by regulatory bodies.

Initially, a vehicle **26** enters the filling station, and the Identification and Transaction Server, at steps **102** and **104,** may identify the new vehicle **26,** as described above, by identifying the vehicle **26** in the one or more video streams being streamed from the one or more video cameras **24.** At step **102,** the server **22** may apply an OCR algorithm to one or more video frames to determine a license plate number of the vehicle. In addition, at step **104,** the server **22** typically performs video analytics to recognize the vehicle type, according to one or more characteristics such as car make, model, sub-model, color, etc.

At a step **106,** the server **22** determines if the collected identifying information, is valid. That is, the server **22** queries a vehicle database (government, municipal, state or any other) of registered vehicles **46** to determine if the vehicle type and license number match. If not, an alert and/or report is issued at a step **110,** as described above. Typically, the server **22** does not permit the refueling transaction to continue if the license plate and vehicle type are not a valid match. In some embodiments, even when the server **22** does not permit the refueling transaction an attendant or supervisor may authorize a refueling transaction, and the event and refueling transaction will be stored and flagged for possible verification and inspection.

If there is a valid match between vehicle type and license plate, the server **22** may receive from the vehicle database **46** identifying information of vehicle ownership, and may also receive information regarding the customer, that is, customer identification (ID) of the authorized driver of the vehicle.

At a step **22** the server **22** queries the vehicle model database **44** to acquire additional information that is relevant for monitoring the refueling process. This information may include the fuel tank opening location on the vehicle **26** and the fuel tank capacity. At a subsequent step **114,** which continues to be performed, in parallel with the additional steps, until the vehicle **26** leaves the station, the server **22** tracks the vehicle **26** in the video acquired by the video cameras **24.** In particular, the server **22** monitors the fuel tank opening of the vehicle **26,** as described above, to confirm that fuel dispensed during the transaction is dispensed solely to the identified vehicle **26.**

At a step **116,** the server **22** may query a customer or car database **52,** according to the customer identifier recovered from the vehicle database query **46.** If the customer has pre-registered and provided billing information, this information may be used for subsequent billing of the transaction. As described above, billing information may include options such as payment by pre-paid credit, or payment by a fleet operator, billing restrictions. Alternatively, payment may be specified as being by conventional methods such as cash, check, debit card, credit card, mobile payment or electronic payment. If a customer is not registered, the server **22** may be configured to accept payment by one of these conventional means. In some cases, the customer database **52** may indicate that the customer is not authorized to purchase gas, for example, if a fleet operator has set a monthly limit on refueling that the customer has exceeded. In such a case where the customer database **52** indicates a problem with the customer account, that is, the query indicates that billing is invalid, then at a step **120** an alert and/or report is issued.

In some embodiments, before authorizing a fueling transaction the system consults the customer database **52** and/or transaction records database **58** and/or any other internal or external database in order to recognize vehicles with a problematic history (left gas station without payment, denied credit card transactions etc.). Such vehicles, for example, may be required to prepay the refueling transaction and will not be allowed to post-pay, an option in many gas stations.

If billing is valid, the server **22** determines a fuel pump **26** proximate to the identified vehicle **26,** and, at a step **22,** the server **22** may communicate a confirmation message to the fuel pump **26,** that is, a message that appears on the fuel pump console **34.** The message is a request to the customer to confirm a vehicle identifier, such as the license plate number, to ensure that the identified vehicle **26** is the vehicle **26** to which fuel will be dispensed. In addition, the server **22** at this time may send a message for the customer to confirm the billing message set in the customer database **52,** or to specify a different billing method, which may be required if the customer has not previously registered a billing method.

Also at one of the above verification steps (**106, 112, 116** or **122**), the server **22** may initiate additional methods of authenticating a customer by validating a customer input against the customer identification (ID). Customer input may include biometric measurements, or methods that exploit mobile device communications as described above. Alternatively, or additionally, the input may be provided as a signal from a vehicle hardware device. The server **22** may be configured to require certain identification methods from some or all customers, or to determine the ID methods according to specifications set in the customer database **52,** as described above.

If at step **122,** the customer does not give approval, the server **22** may at a step **126** send additional vehicle identifiers of other vehicles in the range of fuel pump **28,** that is, vehicles **26** whose fuel tanks are close enough to the fuel pump hose to be refueled by the given fuel pump **26.** The process may be repeated until the customer approves (or alternatively, leaves).

The server **22** may also determine, at a step **128,** that the customer has selected a nozzle **32** of the fuel pump **28** that provides the correct type of fuel for the identified vehicle **26.** That is, the server **22** confirms that the nozzle **32** selected dispenses fuel of the type specified for the vehicle in the vehicle database **44** and/or **46.** If not, the server **22** may send an alert, in the manner of the other alerts, to the fuel pump console **34** and/or the station operator monitor **36.** Determination of which nozzle **32** is selected may be implemented by the video analytics subsystem **42** of the server **22,** which determines that the nozzle **32** is selected when affixed to the vehicle fuel tank. The server **22** will not authorize fueling if the selected nozzle **32** does not dispense fuel of the type required by the vehicle **22.**

In step **130** the server confirms in an image captured by the field terminal that the nozzle is in the fuel tank entry of the approved work vehicle.

If the fuel pump nozzle **32** is not connected to the fuel tank of the identified vehicle **26,** or would provide the wrong fuel, then at a step **134** an alert and/or report is issued. If the connection is correct, then a signal from the server **22** to the fuel pump **28** enables the dispensing of fuel at a step **136** (when the nozzle trigger is activated by the customer). The fuel flows until one of several events occurs. While the refueling process is performed, the server **22** continues to monitor the video stream (continuously), to confirm that the fuel nozzle **32** remains connected to the fuel tank. The server **22** may be configured such that upon determining that the nozzle **32** is disconnected from the fuel tank, the server **22** sends a signal to the fuel pump **28** to deactivate the nozzle **32** and thereby prevent further flow of fuel. The flow may also be stopped by the customer releasing the nozzle trigger, or may be stopped automatically by the fuel pump **28,** after the amount of fuel dispensed reaches the pre-set amount. At this time, the server **22** continues to monitor that the nozzle **32** is connected to the right vehicle **26** or returned to its place at the pump **28.** In some embodiments, the server **22** verifies that it can recognize in the video, the fueling hose from the fuel pump **28** to the nozzle **32** in the selected vehicle **26** fuel tank.

In addition to monitoring that the fuel nozzle **32** remains connected to the fuel tank, the server **22** may monitor no actions are being performed that have been predetermined by a video analytics algorithm to be "suspicious" or otherwise disallowed. For example, in addition to deactivating the nozzle **32** if the nozzle **32** has been removed from the fuel tank, the server **22** may deactivate the nozzle **32** if the customer appears to be blocking a camera's **24** view of the fuel tank. If such an action is identified, an alert may be issued.

If flow stops because the nozzle trigger has been released, the server **22** may continue to monitor the video feed for a disconnection of the nozzle **32** from the fuel tank. If the nozzle **32** is not disconnected and the nozzle trigger is pressed again, the server **22** may reiterate steps it performs in the refueling process, starting, for example, at step **130,** permitting the restart of the fuel flow. When the nozzle **32** is disconnected, the server **22** sends a message to disallow any further fueling.

In some embodiments, at step **138,** the system verifies that the nozzle **32** is properly returned to its position at the pump **28** before closing the transaction and issuance of an invoice to the client. The verification at step **138** can be performed by sensors at the pump **28** itself and/or by image recognition technology.

After the refueling is complete, the server **22,** at a step **140,** combines the billing information, including the purchase amount, to create a transaction record or invoice for billing. Subsequently, at a step **142,** at a time that may be after refueling or after the vehicle **26** leaves the station, the video that was streamed to the server **22** during the monitoring of the identified vehicle **26** is processed by the server **22** for transmission or storage, in order to provide a video record of the transaction. As described above, the transmission may be to a government authority, such as a tax authority. The stored or transmitted video provides proof of the vehicle **26** and/or the customer's presence in the station. As described above, a video file may be created for each transaction, or a time stamp of the video may be stored to subsequently retrieve the relevant segment of video. Storing videos discourages possible abuse by customers that may not be detected in real time.

Unlike the hardware-based method of facilitating billing of fleet vehicles, the system and method of the present invention, as described above, permits registration of vehicles **26** without the need for installing special hardware. Consequently, fleet vehicles **26** that operated with the system are not "locked in" to a proprietary billing system or filling station chain. Unlike other billing methods, the system and method of the present invention ensure that all fuel dispensed is supplied solely to the identified vehicle **26.**

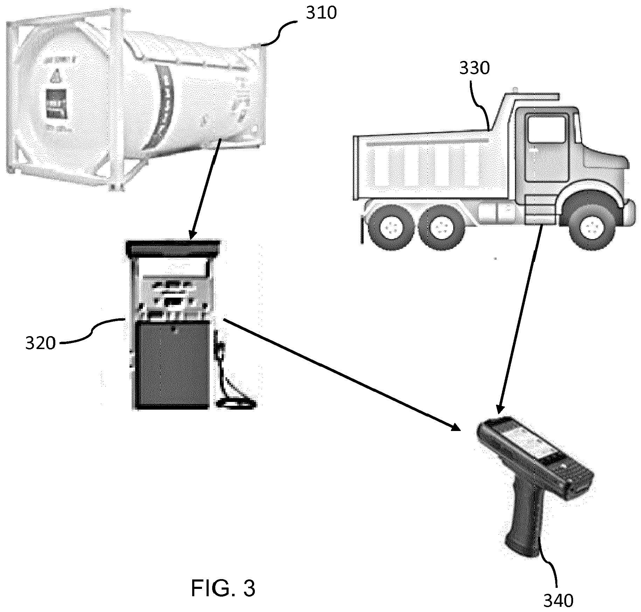

In another aspect, the present invention relates to a system and method for confirming a refueling transaction at a field filling station. **Fig. 3** is a block diagram showing a mobile fuel container **310,** that is typically placed in the field, for example, in proximity to a construction site or any other work area. The mobile fuel container **310** is then connected to a field gas pump **320** that services work vehicles **330.** Initially, authorized work vehicles **330** are registered in the system, by registering one or more of the vehicle license number, make and model, color or any other vehicle identifying details.

Typically, the mobile fuel container **310** comes with a GPS unit so its exact location is registered with the system (it's also possible to use an independent GPS unit to register the location of the mobile fuel container **310** when bringing it to its location). The field gas pump **320** is in a known location / position vis a vis the mobile fuel container's **310** since they are connected by a fuel pipe of a known length. The location of the field gas pump **320** is then registered with the system either by its own GPS unit, via an accelerometer measurement or by a known distance calculation from the mobile fuel container **310,** for example, always 1.5 meters away from a given point of the mobile fuel container **310.**

A mobile field terminal **340** which includes a camera is used to take pictures as described below and to enter authentication and other data if required. The mobile field terminal **340** may be a dedicated device that is used by all drivers or alternatively it may be a mobile phone running a dedicated application or accessing a dedicated web site.

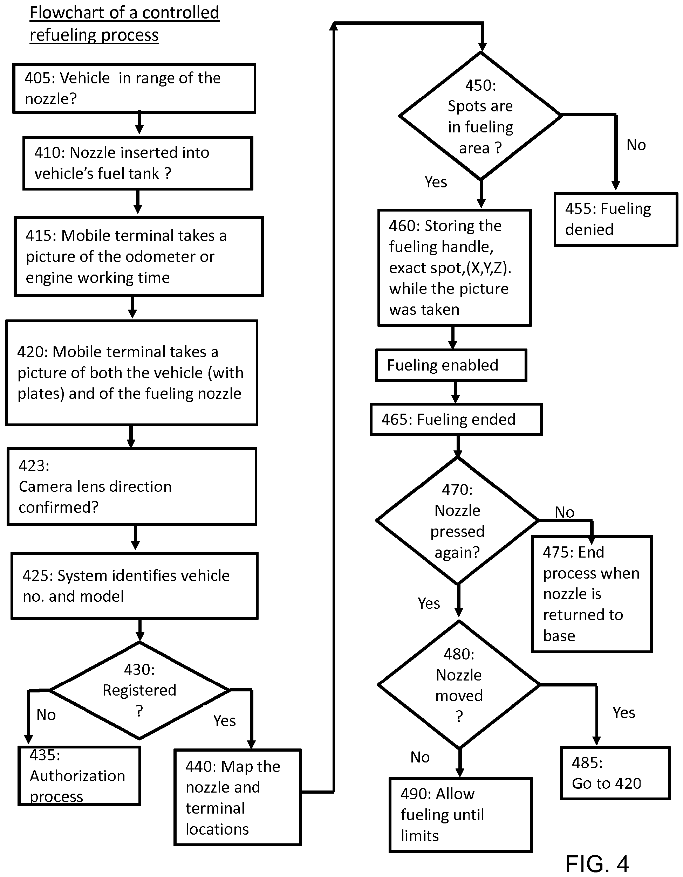

Reference is now made to **Fig. 4** showing an exemplary process of authenticating a field fueling transaction according to an embodiment of the present invention.

When a work vehicle **330** intends to fill up with gas, in step **405** it enters the field filling station area and stops in proximity to the field gas pump **320** so that the fuel pump nozzle is is in proximity to the fuel tank of the work vehicle **330.**

In step **410** the driver (or any other person who wishes to fuel the work vehicle **330**) places the field gas pump **320** nozzle in the fuel tank entry of the work vehicle **330.**

In step **415** the driver (the term "driver" meaning any person servicing the work vehicle **330**) is asked to use the field terminal's **340** camera to capture the work vehicle's **330** current millage and/or engine hours by capturing an image of the odometer or engine hours display on the vehicle's dashboard. The field terminal's **340** camera may be the driver's mobile phone capturing and sending an image to a server, the mobile phone running a dedicated mobile application, or a dedicated device, for example, provided at the field fueling station.

In step **420** the driver is then instructed to capture an image of the work vehicle **330** showing both the license plate and the nozzle inserted inside the fueling tank.

In step **423** the system verifies the orientation of the camera (lens) by reading a compass (if the orientation information is not provided by the accelerometer) in order to assure that the picture taken from the field terminal **340** points to the refueling area.

In step **425** the system analyses the images, recognizes one or more vehicle details and authenticates the work vehicle **330** as a registered and authorized work vehicle **330.** The analysis may be done directly at the field terminal **340** or by a server connected to the field terminal **340.**

In step **430** the system verifies if the identified work vehicle **330** is registered with the system as authorized to refuel at that field fueling station. If the work vehicle **330** is not registered with the system then in step **435** the driver may be given the opportunity to request authorization via a different procedure, for example, by calling a call center or a supervisor that could authenticate the vehicle remotely and authorize the transaction.

Next, if the work vehicle **330** was authenticated as registered for fueling, in step **440** the system analyzes the captured image (or images) and maps the location of the field gas pump **320** nozzle and the location and orientation of the field terminal **340.** Both locations can be mapped via incorporate GPS units and/or based on accelerometer measurements (calculating movements away from a known base location) and/or based on getting the camera lenses orientation from a compass coupled to the field terminal **340.**

In step **450** the system analyzes the captured image (or images) and verifies if the nozzle is actually inserted into the fuel tank entry (by knowing the vehicle **330** model, the system can know where the fuel tank entry is located). If the system cannot assert that the nozzle is inserted in the tank entry, fueling is denied in step **455.**

After the work vehicle **330** and driver are authenticated, and the system has verified that the nozzle is in the fueling tank entry of the work vehicle **330** and the system has registered the work vehicle's **330** millage and/or engine hours, fueling is authorized in step **460** and the fueling process may begin (either automatically by releasing an electronic mechanism to enable fueling or by enabling the driver to activate the nozzle and refuel). The driver is requested to continue and capturing video images of the nozzle inside the fuel tank entry, otherwise fueling is stopped as the system cannot guarantee that the nozzle is in the fuel tank entry.

Once fueling has been authorized and started, it is not necessary to track the vehicle anymore. Only the nozzle **32** position is tracked and as the nozzle **32** doesn't move, fueling is assumed to be to the authorized vehicle. If it is detected that the nozzle **32** has moved beyond a predetermined threshold, the system stops the fueling (sends a signal to the pump not to authorize pumping) and then requires the driver to take another image of the vehicle and nozzle **32** to authorize the fueling transaction.

In step **465** fueling has ended. In step **470** the system waits to see if the nozzle is pressed (activated) again. If not, and the nozzle is returned to its base, the fueling ends in step **475** and the system generates a fueling record transaction including image and/or video support as described before.

If the nozzle is pressed (activated) again, in step **480** the system verifies the nozzle location to check if it has moved from the tank entry. The verification is performed the field terminal **340** or by nozzle accelerometer measurements calculations.

If the nozzle has been removed, the system goes back to step **440** to map the actual locations of the nozzle and field terminal **340.**

If the nozzle has not been removed from the fuel tank entry, in step **490** refueling continues until fueling limits are reached. The system controls the amount of gas dispensed, so it does not exceed the capacity of the work vehicle's **330** fuel tank, and the dispensed amount is in accordance with the captured millage or engine hours as indicators to the last refuling. For example, if the work vehicle **330** has driven 50 kilometers since the last refueling (as verified via the vehicle's **330** logs) and the average fuel consumption is 5 liters/km, it would not make sense to dispense 20 liters of gas, as clearly this would exceed the fuel tank capacity.

Fueling is stopped automatically if the nozzle is removed (as signaled by the accelerometer coupled to the nozzle), if the line of sight to the nozzle is obscured (as captured by the field terminal **340**) or if the system estimates that the fuel tank's fuel capacity has been reached.

The accelerator data are registered and till the end of fueling it is tracked and no movement allowed.

Once the fueling operation has finished, the system generates a transaction record including: location, date, time, vehicle details, driver, amount and type of gas dispensed and video footage of the transaction.

The mobile fuel container's **310** location may be determined via a coupled GPS system, or by having a unique identifier for the mobile fuel container **310** and registering a location in the system, for each identifier.

In some embodiments, the nozzle includes a GPS and/or an accelerometer so that it's movement (from the pump to the vehicle **330**) can be tracked and authenticated.

The field terminal **340** may also include a GPS and/or an accelerometer and/or a compass so that its location and orientation can be calculated (movements away from a known base location), which helps in the analysis of the images the field terminal **340** captures.

It is to be understood that elements of the system and process described above may be combined in different combinations in different embodiments of the present invention. Processing elements of the system may be implemented in digital electronic circuitry, or in computer hardware, firmware, software, or in combinations thereof. Such elements can be implemented as a computer program product, tangibly embodied in an information carrier, such as a non-transient, machine-readable storage device, for execution by, or to control the operation of, data processing apparatus, such as a programmable processor, computer, or deployed to be executed on multiple computers at one site or distributed across multiple sites. Memory storage may also include multiple distributed memory units, including one or more types of storage media. Examples of storage media include, but are not limited to, magnetic media, optical media, and integrated circuits such as read-only memory devices (ROM) and random-access memory (RAM). The system may have one or more processors and one or more network interface modules. Processors may be configured as a multi-processing or distributed processing system. Network interface modules may control the sending and receiving of data packets over networks.

Method steps associated with the system and process can be rearranged and/or one or more such steps can be omitted to achieve the same, or similar, results to those described herein. It is to be understood that the embodiments described hereinabove are cited by way of example, and that the present invention is not limited to what has been particularly shown and described hereinabove. Rather, the scope of the present invention includes variations and modifications thereof which would occur to persons skilled in the art upon reading the foregoing description and which are not disclosed in the prior art.

## Claims

1. A computerized system for controlling a refueling transaction at a filling station comprising:
one or more video cameras configured to capture video of a vehicle in the filling station;
a server, communicatively coupled to the one or more video cameras and to a controller of a fuel pump of the filling station, and comprising a processor and a memory with computer-readable instructions that when executed cause the processor to perform steps of:
determining from the captured video via image recognition techniques a license plate number and a type of the vehicle;
validating a match of the license plate number and the vehicle type according to a registered vehicle database;
identifying the location of the fuel tank entry of the vehicle;
determining from the video via image recognition techniques a fuel pump in proximity to the vehicle, having a fuel hose capable of reaching the identified fuel tank entry of the vehicle;
validating said fuel pump to enable a refueling transaction with said vehicle;
determining from the video via image recognition techniques, after said refueling transaction is authorized, that a nozzle of said fuel pump is inserted into the identified fuel tank entry of said vehicle;
activating the fuel pump nozzle to dispense fuel, after determining said nozzle is inserted into said fuel tank of said vehicle; and
determining from the video via image recognition techniques that the nozzle is inserted into the fuel tank before reactivating said fuel pump after it has stopped to dispense fuel.

2. The system of claim 1, wherein determination of the vehicle license plate number is performed by optical character recognition and determining the vehicle type is performed by video analytics.

3. The system of claim 1, wherein the one or more video cameras track the vehicle when entering the filling station, while advancing in the filling station and while fueling.

4. The system of claim 1, wherein if it cannot be determined from the video that the nozzle is inserted into said fuel tank, the system issues a message to the vehicle driver to clear the area near the fuel tank, so the inserted nozzle can be captured on said video.

5. The system of claim 1, wherein the server is further configured to authenticate the customer by validating a customer input against a customer ID, wherein the customer input is one or more of a code entered at a fuel pump console, a biometric measure identifying the customer, a signal from a vehicle hardware device, or a response from a predefined mobile device or mobile application.

6. The system of claim 2, wherein the server is further configured to determine a failed match of the license plate number and the vehicle type and responsively to issue an alert to an external party.

7. The system of claim 1, wherein the server is further configured to generate a refueling transaction record including a transaction identifier and optionally video support for the refueling transaction.

8. The system of claim 7, wherein the server is further configured to store the video with the transaction identifier for subsequent playback.

9. The system of claim 7, wherein the transaction record further includes one more of the license plate number, the vehicle type, a filling station identifier, a time and date of transaction, an amount of fuel provided, and an amount paid or to be paid.

10. A computing system comprising:
at least one processor; and
at least one memory communicatively coupled to the at least one processor comprising computer-readable instructions that when executed by the at least one processor cause the computing system to implement a method of controlling a filling station transaction, the method comprising:
reading video received from one or more video cameras in the filling station;
determining from the video via image recognition techniques a license plate number and a type of the vehicle;
validating a match of the license plate number and the vehicle type according to a registered vehicle database;
identifying the location of the fuel tank entry of the vehicle;
determining from the video via image recognition techniques a fuel pump in proximity to the vehicle, having a fuel hose capable of reaching the identified fuel tank of the vehicle;
validating said fuel pump to enable a refueling transaction with said vehicle;
determining from the video via image recognition techniques that a nozzle of the fuel pump is connected to the identified fuel tank entry of the vehicle;
activating the fuel pump nozzle to dispense fuel, responsively to validating the match, determining the proximate fuel pump, and determining the connection of the nozzle to the fuel pump; and
maintaining activation of the nozzle while determining from the video that the nozzle remains connected to the fuel tank.

11. A computerized system for controlling a refueling transaction at a field filling station comprising:
a field terminal configured to capture one or more images of a work vehicle in the field filling station;
a server, communicatively coupled to the field terminal and to a controller of a field fuel pump of the field filling station, and comprising a processor and a memory with computer-readable instructions that when executed cause the processor to perform steps of:
determining from the captured one or more images via image recognition techniques a license plate number and a type of the work vehicle;
validating a match of the license plate number and the work vehicle type according to a registered work vehicle database;
identifying the location of the fuel tank entry of the work vehicle;
determining from the one or more images via image recognition techniques a fuel pump in proximity to the work vehicle, having a fuel hose capable of reaching the identified fuel tank entry of the work vehicle;
determining from the one or more images via image recognition techniques, that a nozzle of said field fuel pump is inserted into a fuel tank of said work vehicle;
determining from one or more captured images, via image recognition techniques, the work vehicle's current millage and/or engine hours;
determining from one or more captured images, via image recognition techniques, that the field fuel nozzle is inserted into the fueling tank of said work vehicle;
authenticating a fueling person;
activating the fuel pump nozzle to dispense fuel; and
when determining from the video via image recognition techniques that the nozzle is not inserted into the fuel tank the line of sight to the nozzle is obstructed, stopping the fueling to the work vehicle.

12. The system of claim 11, wherein the field terminal includes an accelerometer to determine the actual location of the field terminal.

13. The system of claim 11, wherein the field terminal includes a compass to determine the actual orientation of the field terminal.

14. The system of claim 11, wherein the field terminal is a mobile phone running a dedicated application.

15. The system of claim 11, wherein a refueling transaction record is generated including a transaction identifier and a captured image.
